# EUROPÄISCHE PATENTSCHRIFT

(11) **EP 1 737 257 B1**
(45) Veröffentlichungstag und Bekanntmachung des Hinweises auf die Patenterteilung: **06.05.2009**
(21) Anmeldenummer: 05013387.5
(22) Anmeldetag: 21.06.2005
(51) Int. Cl.: H04W 8/18

(54) **Speicherung der Kennung eines Netzwerkteilbereichs mit einem oder mehreren Platzhaltern**
Storing the identification of a network partition with one or more placeholders
Enregistrement d'identification d'un section de réseau avec un ou plusieurs caractères de remplacement

(43) Veröffentlichungstag der Anmeldung: 27.12.2006
(73) Patentinhaber: Telefónica O2 Germany GmbH & Co. oHG, 80992 München (DE)
(72) Erfinder: Macarro, Agustin, 80469 München (DE); Berger, Achim, 85084 Langenbruck (DE); Marsden, Roger, 81737 München (DE)
(74) Vertreter: Herrmann, Uwe

(56) Entgegenhaltungen:
- WO-A-01/17308
- DE-C1- 19 731 461

## Beschreibung

Die Erfindung betrifft ein Kommunikationssystem für den Mobilfunk mit mobilen Endgeräten, wobei innerhalb des durch das Kommunikationssystem abgedeckten Gesamtgebietes wenigstens ein Teilnehmergebiet festgelegt ist, innerhalb dessen die Kommunikation von und/oder zu den mobilen Endgeräten unter besonderen Bedingungen erfolgt, wobei das Gesamtgebiet in Teilbereiche unterteilt ist, die Kennungen aufweisen. Das Kommunikationssystem weist ferner Speichermittel auf, in denen wenigstens eine Kennung eines Teilbereiches gespeichert ist, sowie Prüfmittel, durch die feststellbar ist, ob die Kennung des Teilbereiches, in dem sich das mobile Endgerät befindet von den in den Speichermitteln gespeicherten Kennungen umfaßt ist.

Bei vorbekannten Kommunikationssystemen dieser Art ist es bekannt, dass Location Area Codes (LAC) und Kennungen (CI) von Funkzellen, die zu einem bestimmten Teilnehmergebiet gehören, in Form einer Liste beispielsweise auf der SIM-Karte der mobilen Endgeräte gespeichert werden. Denkbar ist beispielsweise, dass ein Teilnehmergebiet eines Nutzers mehrere Zellen umfaßt und dass auf der SIM-Karte des mobilen Endgerätes dieses Nutzers eine entsprechende Anzahl von Kennungen LAC/Cl gespeichert ist. Dabei ist vorgesehen, dass die Prüfmittel eine Überprüfung dahingehend durchführen, ob die per Funk empfangene Kennung LAC/Cl der Zelle, in der sich das mobile Endgerät befindet, in der gespeicherten Liste der Kennungen LAC/Cl enthalten ist. Ist dies der Fall, wird dies dem Nutzer auf dem Display durch ein entsprechendes Icon angezeigt oder akustisch mitgeteilt. Andernfalls unterbleibt eine solche Anzeige bzw. Mitteilung.

Die DE 197 31 461 C1 beschreibt ein Kommunikationssystem für den Mobilfunk mit mobilen Endgeräten, wobei innerhalb des durch das Kommunikationssystem abgedeckten Gesamtgebietes wenigstens ein Teilnehmergebiet festgelegt ist. Innerhalb dieses Teilnehmergebietes erfolgt die Kommunikation von und/oder zu den mobilen Endgeräten unter besonderen Bedingungen, wobei das Gesamtgebiet in Teilbereiche unterteilt ist, die Kennungen aufweisen.

Die WO 01/17308 A1 betrifft ein Intelligent-Network-System und ein Verfahren zum Verfahren eines Intelligent-Network-Systems. Dabei beschreibt die WO 01/17308 A1 den Einsatz von Platzhaltern zur Speicheroptimierung für die Einspeicherung der Kennung von Teilbereichen eines Gesamtgebiets, das durch ein Kommunikationssystem abgedeckt wird.

Als problematisch hat es sich im Falle großer Teilnehmergebiete, wie beispielsweise dem Gebiet einer Großstadt, erwiesen, einen ausreichenden Speicherplatz für die entsprechende Vielzahl von Kennungen zur Verfügung zu stellen. Die Cityzone einer Großstadt kann beispielsweise 600 Zellen umfassen, so dass eine entsprechende Anzahl von Kennungen abzuspeichern ist. Dies ist insbesondere dann problematisch, wenn sich die Speichermittel auf dem SIM-Modul befinden. Ein weiterer Nachteil besteht darin, dass bei jeder Änderung der Netzwerktopologie, die zu einer Änderung der Kennungen der Location Areas oder Funkzellen führt, eine entsprechende Änderung bzw. ein Update des Speichers vorzunehmen ist, in dem die Kennungen des Teilnehmergebietes abgelegt sind.

Der vorliegenden Ereindung liegt daher die Aufgabe zugrunde, ein Kommunikationssystem der eingangs genannten Art dahingehend weiterzubilden, dass der Speicherbedarf für die Speicherung von Kennungen verringert wird und dass Änderungen der Netzwerktopologie hinsichtlich des Updates der gespeicherten Kennungen mit geringem Aufwand verbunden sind.

Erfindungsgemäß wird diese Aufgabe durch ein Kommunikationssystem für den Mobilfunk mit den Merkmalen des Anspruchs 1 gelöst. Erfindungsgemäß ist vorgesehen, dass die gespeicherten Kennungen der Teilbereiche einen oder mehrere Platzhalter aufweisen, die eine Mehrzahl von Werten repräsentieren. Bestehen beispielsweise die Kennungen der Zellen aus fünf Ziffern und weisen die Kennungen der Zellen einer Location Area in dem betreffenden Teilnehmergebiet eines Nutzers die Endziffern 4178 auf, ist erfindungsgemäß vorgesehen, dass nicht sämtliche Kennungen des Teilnehmergebietes als solche, sondern nur die Kennung LAC/#4178 gespeichert wird, wobei LAC für die Kennung der Location Area und # für den Platzhalter steht. Die Zugehörigkeit zu einem Teilnehmergebiet wird bei korrekter LAC dann als gegeben erachtet, wenn die empfangene Kennung der Funkzelle, in der sich das mobile Endgerät befindet, eine Nummer mit den Endziffern 4178, also beispielsweise 14178, 24178, 34178 etc. aufweist,

Dieses Schema ist selbstverständlich auch mit mehr als einem Platzhalter anwendbar. Der Platzhalter kann an einer beliebigen Position der Kennung angeordnet sein.

Entsprechendes gilt selbstverständlich nicht nur für die Kennungen von Funkzellen, sondern auch die von Location Areas, d.h. auch die Kennungen LAC der Location Areas können einen oder mehrere Platzhalter aufweisen.

In weiterer Ausgestaltung der Erfindung ist vorgesehen, dass die durch den oder die Platzhalter repräsentierten Werte beliebige Werte oder vorgebbare Werte bilden. Denkbar ist somit beispielsweise, dass der Platzhalter einen beliebigen Wert darstellen kann. Denkbar ist ebenfalls der Fall, dass der Platzhalter nur bestimmte Werte, beispielsweise Werte aus einem begrenzten Bereich einnehmen kann.

Wie oben ausgeführt, ist das von dem Kommunikationssystem erfaßte Gesamtgebiet üblicherweise in Location Areas aufgeteilt, in denen sich eine oder mehrere Funkzellen befinden. Die genannten Teilbereiche können somit durch Location Areas und/oder Funkzellen gebildet werden. Wird als Teilnehmergebiet beispielsweise das Gebiet einer Großstadt, d.h. eine Cityzone, definiert, können sich in dem Teilnehmergebiet 600 Zellen befinden. In kleineren Zonen, wie beispielsweise der Homezone liegen dagegen üblicherweise nur ca. 20 Zellen, wobei die genannten Werte selbstverständlich nur Beispiele darstellen.

In weiterer Ausgestaltung der Erfindung ist vorgesehen, dass in den Speichermitteln Kennungen von Teilbereichen, d.h. z.B. von Location Areas bzw. Funkzellen gespeichert sind, die innerhalb eines Teilnehmergebietes liegen. Denkbar ist beispielsweise, dass eine gesamte Location Area innerhalb eines Teilnehmergebietes liegt, so dass nur deren Kennung gespeichert werden muß. Für Location Areas, deren Funkzellen teilweise innerhalb und teilweise außerhalb des Teilnehmergebietes liegen, kann vorgesehen sein, dass nur die Kennungen der Funkzellen gespeichert sind, die innerhalb des Teilnehmergebietes liegen. Eine derartige Vorgehensweise ist insbesondere dann sinnvoll, wenn weniger Funkzellen der Location Area innerhalb als außerhalb des Teilnehmergebietes liegen.

Selbstverständlich kann auch vorgesehen sein, dass in den Speichermitteln Kennungen von Teilbereichen, d.h. beispielsweise von Location Areas bzw. Funkzellen gespeichert sind, die außerhalb eines Teilnehmergebietes liegen. Eine derartige Vorgehensweise empfiehlt sich dann, wenn die Anzahl der Funkzellen einer Location Area, die außerhalb des Teilnehmergebietes liegen, geringer ist als die Anzahl der Funkzellen der Location Area, die innerhalb des Teilnehmergebietes liegen. In diesem Fall werden vorzugsweise nur die Kennungen der Zellen gespeichert, die außerhalb des Teilnehmergebietes liegen.

Wie oben ausgeführt, ist das Vorhandensein von Platzhaltern in den gespeicherten Kennungen nicht nur bei Kennungen von Funkzellen, sondern beispielsweise auch bei Kennungen beliebiger anderer Teilbereiche, wie beispielsweise Location Areas anwendbar. Denkbar ist somit beispielsweise, dass die Location Area Codes (LAC) ebenfalls mit einem oder mehreren Platzhaltern gespeichert werden, was ebenfalls den Speicherbedarf entsprechend reduziert.

Denkbar ist ferner der Fall, dass nur die Kennungen der Location Areas Platzhalter aufweisen, während die Kennungen der Funkzellen vollständig gespeichert sind. Denkbar ist auch der Fall, dass die Kennungen der Funkzellen Platzhalter aufweisen, wohingegen die Kennungen der Location Areas ohne Platzhalter gespeichert sind.

Die Anordnung der Prüfmittel, die prüfen, ob die aktuellen Kennungen den gespeicherten Kennungen entsprechen, sowie der Speichermittel, in denen die Kennungen abgelegt sind, ist an sich beliebig. Denkbar ist beispielsweise, dass die Prüfmittel und/oder die Speichermittel in den mobilen Endgeräten oder netzseitig angeordnet sind. Weiterhin kann vorgesehen sein, dass in die mobilen Endgeräte einsetzbare Module, vorzugsweise SIM-Module vorgesehen sind und dass die Speichermittel und/oder die Prüfmittel auf diesen Modulen angeordnet sind.

In weiterer Ausgestaltung der Erfindung ist eine Datenbank vorgesehen, die die Netzwerktopologie betreffende Daten enthält. Die Datenbank kann beispielsweise den Ort bzw. die Koordinaten und die Kennungen sämtlicher Funkzellen und Location Areas enthalten. Des weiteren umfaßt das Kommunikationssystem eine Ermittlungseinheit, die auf der Grundlage der Daten dieser Datenbank die Kennungen von den Teilbereichen ermittelt, die ein Teilnehmergebiet betreffen. Es kann sich beispielsweise um die Kennungen der Location Areas und Funkzellen handeln, die innerhalb des Teilnehmergebietes liegen. Denkbar ist auch der Fall, dass die Funkzellen einer Location Area teilweise innerhalb und teilweise außerhalb eines Teilnehmergebietes liegen und dass die ermittelten Kennungen nur die Kennungen der Funkzellen einer Location Area umfassen, die außerhalb des Teilnehmergebietes liegen.

Schließlich ist eine Prüfeinheit vorgesehen, die eine Prüfung vornimmt, ob die auf diese Weise ermittelten Kennungen mit den Kennungen übereinstimmen, die in den Speichermitteln gespeichert sind. Ist dies nicht der Fall, kann vorgesehen sein, dass die ermittelten Kennungen zum Zwecke des Speicher-Updates mittels einer Sendeeinheit an die Speichermittel bzw. an ein mobiles Endgerät übersendet werden, in dem sich die Speichermittel befinden. Wie oben ausgeführt, können die Speichermittel beispielsweise in einer SIM-Karte angeordnet sein, die in das mobile Endgerät einsetzbar ist. Stimmen die ermittelten Kennungen nach wie vor trotz Änderung der Netzwerktopologie mit den gespeicherten Kennungen überein, überbleibt das Update des Speichers.

Dabei kann vorgesehen sein, dass die Datenbank bei jeder Änderung der Netzwerktopologie entsprechend geändert wird und dass in bestimmten Zeitabständen, beispielsweise täglich, geprüft wird, ob bzw. welche Änderungen der Kennungen der Teilnehmergebiete mit den Änderungen der Netzwerktopologie verbunden sind. Auf diese Weise ist es möglich, die in den Speichermitteln gespeicherten Kennungen stets kurzfristig zu aktualisieren.

Für den Fall, dass die Speichermittel in dem mobilen Endgerät angeordnet sind und das mobile Endgerät nicht erreichbar ist, kann vorgesehen sein, dass die Update-Information, d.h. die neuen Kennungen zwischengespeichert und erst bei Erreichbarkeit des mobilen Endgerätes abgesandt werden.

Die Sendeeinheit kann derart ausgeführt sein, dass die ermittelten Daten per Funk, d.h. per OTAP übersendet werden.

Die Datenbank und/oder die Ermittlungseinheit und/oder die Prüfeinheit können netzseitig angeordnet sein.

Die Erfindung betrifft ferner die Verwendung eines mobilen Endgerätes zum Betrieb in einem Kommunikationssystem gemäß einem der Ansprüche 1 bis 13, wobei das Kommunikationssystem Speichermittel, in denen Kennungen von Teilbereichen eines durch das Kommunikationssystem abgedeckten Gesamtgebietes gespeichert sind, sowie Prüfmittel enthält, durch die feststellbar ist, ob die Kennung des Teilbereiches, in dem sich das mobile Endgeräte befindet, von den in den Speichermitteln gespeicherten Kennungen umfaßt ist. Dabei kann erfindungsgemäß vorgesehen sein, dass die gespeicherten Kennungen der Teilbereiche einen oder mehrere Platzhalter aufweisen, die eine Mehrzahl von Werten repräsentieren, wobei die Speichermittel und/oder die Prüfmittel in dem mobilen Endgerät angeordnet sind. Die Speichermittel bzw. die Prüfmittel können in dem mobilen Endgerät selbst oder auf einem in das mobile Endgerät einsetzbaren Modul, insbesondere auf dem SIM-Modul angeordnet sein.

In weiterer Ausgestaltung der Erfindung weist das mobile Endgerät Empfangsmittel auf, mittels derer die Kennungen der Location Areas bzw. Funkzellen empfangen werden, die für ein oder mehrere Teilnehmergebiete zu speichern sind. In bevorzugter Ausgestaltung der Erfindung weist das mobile Endgerät ein Prüfmittel auf, das die seitens des mobilen Endgerätes empfangene Kennung dahingehend prüft, ob diese von den gespeicherten Kennungen umfasst ist.

Befindet sich das mobile Endgerät in einem der für den Nutzer definierten Teilnehmergebiete, kann vorgesehen sein, dass durch das mobile Endgerät ein optisches Signal, beispielsweise ein Icon oder Text, oder ein akustisches Signal abgegeben wird.

Weitere Einzelheiten und Vorteile der Erfindung werden anhand eines im folgenden dargestellten Ausführungsbeispiels näher erläutert.

In einem ersten Beispiel liegt eine Location Area teilweise innerhalb und teilweise außerhalb eines Teilnehmergebietes eines Nutzers. Die Location Area weist eine Vielzahl von Funkzellen auf, von denen ein vergleichsweise kleiner Teil innerhalb des Teilnehmergebietes liegt und ein großer Teil außerhalb. Die Location Area weist beispielsweise die Kennung LAC = 12345 auf. Die Kennungen der Zellen dieser Location Area, die innerhalb des Teilnehmergebietes des Nutzers liegen weisen beispielsweise die Werte CI = 00023, 10023, 20023, 30023, 40023, 50023 auf. Anstatt all diese Kennungen zu speichern, enthält der Speicher für Cl nur die Kennung 00023, wobei die erste Null einen Platzhalter darstellt, der Werte zwischen 0 und 5 einnehmen kann. Die Speichermittel enthalten in diesem Beispiel somit nur die Kennung LAC/Cl = 12345/00023, wodurch sechs verschiedene Zellen, die innerhalb des Teilnehmergebietes liegen, erfaßt sind.

Die Kennungen der Location Areas und Funkzellen eines oder mehrerer Teilnehmergebiete werden im Rahmen der Bereitstellung des Service bestimmt und sodann an die Speichermittel übersendet. Denkbar ist beispielsweise, dass aufgrund der Adresse eines Kunden und der Art des Teilnehmergebietes (Homezone, Cityzone) die Kennungen der Location Areas / Funkzellen bestimmt werden, die innerhalb des Teilnehmergebietes liegen. Die Kennungen können beispielsweise per SMS oder auch auf andere Weise an das mobile Endgerät übersandt und in diesem oder in der SIM-Karte gespeichert werden.

Um klarzustellen, dass die erste Stelle der in dem Beispiel genannten Cl einen Platzhalter darstellt, kann ein entsprechender Indikator die Werte "0" oder "1" einnehmen, wobei für den Fall, dass der Wert "0" ist, die Kennung Cl einen Platzhalter an Stelle 1 aufweist. Weist der Indikator beispielsweise den Wert "1" auf, bedeutet dies, dass es die Kennung keinen Platzhalter aufweist.

In einem zweiten Beispiel befindet sich eine Location Area ebenfalls teilweise innerhalb und teilweise außerhalb eines Teilnehmergebietes, wobei die Anzahl der Zellen, die außerhalb des Teilnehmergebietes liegen, kleiner ist als die Anzahl der Funkzellen, die sich innerhalb des Teilnehmergebietes befinden. In diesem Fall werden nur die Kennungen der Zellen der Location Area gespeichert, die außerhalb des Teilnehmergebietes liegen.

In diesem Beispiel sei die Kennung der Location-Area LAC = 12345. Gespeichert werde als Cl nur der Wert 53443, wobei dieser Wert die Zellen mit den Kennungen Cl = 03443, 13443, 23443, 33443, 43443, 53443 erfaßt. Anstatt die Kennungen dieser außerhalb liegenden Funkzellen explizit zu speichern, wird wie oben ausgeführt nur der Wert LAC/CI = 12345/53443 gespeichert, wobei die erste Stelle der CI den Platzhalter darstellt. Auch in diesem Beispiel ist über einen Indikator, der die Werte "0" oder "1" annehmen kann, klarzustellen, ob die Kennung CI einen Platzhalter enthält oder nicht.

In einem dritten Beispiel enthält die gespeicherte LAC beispielsweise die Kennung 23835, wobei die beiden letzten Ziffern Platzhalter repräsentieren, die Werte zwischen 0 und 9 annehmen können. Umfasst ist daher jede LAC mit Werten zwischen 23800 und 23899.

Denkbar ist beispielsweise, dass in den Speichermitteln für LAC/Cl der Wert 23835/11111 gespeichert ist, wobei Zellen mit der Kennung Cl = 11111 umfasst sind, die in den Location Areas mit den Kennungen LAC zwischen 23800 und 23899 enthalten sind.

Ein wesentlicher Vorteil der Erfindung besteht darin, dass der Speicherbedarf zur Speicherung der Kennungen aufgrund des Vorhandenseins eines oder mehrerer Platzhalter gering ist. Ein weiterer Vorteil besteht darin, dass Netzwerkänderungen nicht stets ein Update der gespeicherten Kennungen erfordern. Ändert sich beispielsweise die Netzwerktopologie durch die Schaffung neuer Zellen, die Entfernung von Zellen oder beispielsweise die Zuordnung von Zellen zu einer anderen Location Area ist nicht zwingend ein Update des Speicherinhaltes erforderlich. Wird beispielsweise in einer Prüfeinheit festgestellt, dass die gespeicherten Kennungen noch aktuell sind, was beispielsweise dann der Fall sein kann, wenn die hinzugefügte Zelle hinsichtlich ihrer Kennung von den mit Platzhalter gespeicherten Kennungen umfaßt ist, wird kein Update durchgeführt. Dies kann insbesondere dann von großem Vorteil sein, wenn beispielsweise bei größeren Veranstaltungen nur vorübergehend eine Vielzahl von neuen Zellen hinzukommt. Sind die Speicherbereiche entsprechend der Erfindung konfiguriert, läßt sich die Anzahl der erforderlichen Updates erheblich reduzieren.

## Patentansprüche

1. Kommunikationssystem für den Mobilfunk mit mobilen Endgeräten, wobei innerhalb des durch das Kommunikationssystem abgedeckten Gesamtgebietes wenigstens ein Teilnehmergebiet festgelegt ist, innerhalb dessen die Kommunikation von und/oder zu den mobilen Endgeräten unter besonderen Bedingungen erfolgt, wobei das Gesamtgebiet in Teilbereiche unterteilt ist, die Kennungen aufweisen, und wobei das Kommunikationssystem Speichermittel, in denen wenigstens eine Kennung eines Teilbereiches gespeichert ist, sowie Prüfmittel aufweist, durch die feststellbar ist, ob die Kennung des Teilbereiches, in dem sich das mobile Endgerät befindet, von den in den Speichermitteln gespeicherten Kennungen umfaßt ist,
**dadurch gekennzeichnet,**
**dass** die wenigstens eine in den Speichermitteln gespeicherte Kennung des Teilbereiches einen oder mehrere Platzhalter aufweist, der eine Mehrzahl von Werten repräsentiert und
**dass** eine Prüfeinheit vorgesehen ist, die derart beschaffen ist, dass mittels der Prüfeinheit überprüfbar ist, ob bei Änderungen der Netzwerktopologie ein Update der eingespeicherten Kennungen eines Teilbereichs vorzunehmen ist oder nicht.

2. Kommunikationssystem für den Mobilfunk nach Anspruch 1, **dadurch gekennzeichnet, dass** die durch den oder die Platzhalter repräsentierten Werte beliebige Werte oder vorgebbare Werte bilden.

3. Kommunikationssystem nach Anspruch 1 oder 2; **dadurch gekennzeichnet, dass** in dem Gesamtgebiet Location Areas angeordnet sind, in denen sich eine oder mehrere Funkzellen befinden, und dass die Teilbereiche durch Location Areas und/oder Funkzellen gebildet werden.

4. Kommunikationssystem nach einem der vorhergehenden Ansprüche, **dadurch gekennzeichnet, dass** in den Speichermitteln eine oder mehrere Kennungen von Teilbereichen gespeichert sind, die innerhalb eines Teilnehmergebietes liegen.

5. Kommunikationssystem nach einem der vorhergehenden Ansprüche, **dadurch gekennzeichnet, dass** in den Speichermitteln eine oder mehrere Kennungen von Teilbereichen gespeichert sind, die außerhalb eines Teilnehmergebietes liegen.

6. Kommunikationssystem nach einem der Ansprüche 3 bis 5, **dadurch gekennzeichnet, dass** die Kennungen der Location Areas und/oder die Kennungen der Funkzellen Platzhalter aufweisen.

7. Kommunikationssystem nach einem der Ansprüche 3 bis 6, **dadurch gekennzeichnet, dass** nur die Kennungen der Location Areas oder nur die Kennunggen der Funkzellen Platzhalter aufweisen.

8. Kommunikationssystem nach einem der vorhergehenden Ansprüche, **dadurch gekennzeichnet, dass** die Prüfmittel und/oder die Speichermittel in den mobilen Endgeräten oder netzseitig angeordnet sind.

9. Kommunikationssystem nach einem der vorhergehenden Ansprüche, **dadurch gekennzeichnet, dass** in die mobilen Endgeräte einsetzbare Module vorgesehen sind, und dass die Speichermittel und/oder die Prüfmittel auf diesen Modulen angeordnet sind.

10. Kommunikationssystem nach einem der vorhergehenden Ansprüche, **dadurch gekennzeichnet, dass** eine Datenbank vorgesehen ist, die die Netzwerktopologie betreffende Daten enthält, dass eine Ermittlungseinheit vorgesehen ist, die auf der Grundlage dieser Daten die Kennungen von Teilnehmergebiete betreffenden Teilbereichen ermittelt, und dass eine Prüfeinheit vorgesehen ist, die eine Prüfung vornimmt, ob die ermittelten Kennungen mit den in den Speichermitteln gespeicherten Kennungen übereinstimmen.

11. Kommunikationssystem nach Anspruch 10, **dadurch gekennzeichnet, dass** eine Einheit vorgesehen ist, die für den Fall, dass die ermittelten Kennungen mit den in den Speichermitteln gespeicherten Kennungen nicht übereinstimmen, die ermittelten Kennungen zum Zwecke von deren Speicherung an die Speichermittel übersendet.

12. Kommunikationssystem nach Anspruch 11, **dadurch gekennzeichnet, dass** die Einheit derart ausgeführt ist, dass die ermittelten Kennungen per Funk übertragen werden.

13. Kommunikationssystem nach einem der Ansprüche 10 bis 12, **dadurch gekennzeichnet, dass** die Datenbank und/oder die Ermittlungseinheit und/oder die Prüfeinheit netzseitig angeordnet sind.

14. Verwendung eines mobilen Endgerätes zum Betrieb in einem Kommunikationssystem gemäß einem der Ansprüche 1 bis 13, wobei das Kommunikationssystem Speichermittel, in denen eine oder mehrere Kennungen von Teilbereichen eines durch das Kommunikationssystem abgedeckten Gesamtgebietes gespeichert sind, sowie Prüfmittel enthält, durch die feststellbar ist, ob die Kennung des Teilbereiches, in dem sich das mobile Endgerät befindet, von den in den Speichermitteln gespeicherten Kennungen umfaßt ist, wobei die wenigstens eine gespeicherte Kennung des Teilbereiches einen oder mehrere Platzhalter aufweist, der eine Mehrzahl von Werten repräsentiert, und dass die Speichermittel und/oder die Prüfmittel in dem mobilen Endgerät angeordnet sind.

15. Verwendung eines mobilen Endgerätes nach Anspruch 14, **dadurch gekennzeichnet, dass** die Speichermittel und/oder die Prüfmittel in dem mobilen Endgerät selbst oder auf einem in das mobile Endgerät einsetzbaren Modul angeordnet sind.

## Claims

1. Communication system for mobile radio with mobile terminals, wherein, within the total zone covered by the communication system, at least one subscriber zone is established within which the communication from and/or to the mobile terminals takes place under special conditions, the total zone being subdivided into part areas which have identities, and wherein the communication system has storage means in which at least one identity of a part area is stored, and test means by means of which it can be established whether the identity of the part area in which the mobile terminal is located is comprised by the identities stored in the storage means,
**characterized in that**
the at least one identity, stored in the storage means, of the part area has one or more dummy characters which represent a plurality of values and
**in that** a test unit is provided which is arranged in such a manner that by means of the test unit it is possible to check whether an update of the stored identities of a part area has to be performed or not in the case of changes in the network topology.

2. Communication system for mobile radio according to Claim 1, **characterized in that** the values represented by the dummy character or characters form arbitrary values or predeterminable values.

3. Communication system according to Claim 1 or 2, **characterized in that** in the total zone, location areas are arranged in which one or more radio cells are located and **in that** the part areas are formed by location areas and/or radio cells.

4. Communication system according to one of the preceding claims, **characterized in that** one or more identities of part areas which are located inside a subscriber zone are stored in the storage means.

5. Communication system according to one of the preceding claims, **characterized in that** one or more identities of part areas which are located outside a subscriber zone are stored in the storage means.

6. Communication system according to one of Claims 3 to 5, **characterized in that** the identities of the location areas and/or the identities of the radio cells have dummy characters.

7. Communication system according to one of Claims 3 to 6, **characterized in that** only the identities of the location areas or only the identities of the radio cells have dummy characters.

8. Communication system according to one of the preceding claims, **characterized in that** the test means and/or the storage means are arranged in the mobile terminals or on the network side.

9. Communication system according to one of the preceding claims, **characterized in that** modules which can be inserted into the mobile terminals are provided and **in that** the storage means and/or the test means are arranged in these modules.

10. Communication system according to one of the preceding claims, **characterized in that** a database is provided which contains data relating to the network topology, **in that** a determining unit is provided which determines on the basis of these data the identities of part areas relating to subscriber zones, and **in that** a test unit is provided which carries out a test as to whether the identities determined correspond to the identities stored in the storage means.

11. Communication system according to Claim 10, **characterized in that** a unit is provided which, in the case where the identities determined do not correspond to the identities stored in the storage means, sends the identities determined to the storage means for the purpose of storing them.

12. Communication system according to Claim 11, **characterized in that** the unit is arranged in such a manner that the identities determined are transmitted by radio.

13. Communication system according to one of Claims 10 to 12, **characterized in that** the database and/or the determining unit and/or the test unit are arranged on the network side.

14. Use of a mobile terminal for operation in a communication system according to one of claims 1 to 13, wherein the communication system contains storage means in which one or more identities of part areas of a total zone covered by the communication system are stored, and test means by means of which it can be established whether the identity of the part area in which the mobile terminal is located is comprised by the identities stored in the storage means, wherein the at least one stored identity of the part area has one or more dummy characters which represent a plurality of values, and in that the storage means and/or the test means are arranged in the mobile terminal.

15. Use of a mobile terminal according to Claim 14, **characterized in that** the storage means and/or the test means are arranged in the mobile terminal itself or in a module which can be inserted into the mobile terminal.

## Revendications

1. Système de communication pour la téléphonie mobile avec des appareils terminaux mobiles, où est déterminé à l'intérieur de la zone totale couverte par le système de communication au moins une zone d'abonnés, à l'intérieur de laquelle la communication depuis et/ou vers les appareils terminaux mobiles a lieu sous certaines conditions, où la zone totale est subdivisée en zones partielles qui présentent des identifications, et où le système de communication présente des moyens de stockage, dans lesquels est stocké au moins une identification d'une zone partielle, ainsi que des moyens de vérification qui permettent de constater si l'identification de la zone partielle, dans laquelle se trouve l'appareil terminal mobile, est comprise dans les identifications stockées dans les moyens de stockage,
**caractérisé en ce que**
la au moins une identification de zone partielle stockée dans les moyens de stockage présente un ou plusieurs paramètres fictifs qui représentent une pluralité de valeurs et
**en ce qu'**une unité de vérification est prévue qui est conçue de telle sorte qu'au moyen de l'unité de vérification il peut être vérifié si dans le cas de modifications de la topologie de réseau, il faut procéder ou non à une mise à jour des identifications stockées d'une zone partielle.

2. Système de communication pour la radiophonie mobile selon la revendication 1, **caractérisé en ce que** les valeurs représentées par le ou les paramètres fictifs constituent des valeurs aléatoires ou des valeurs prédéfinissables.

3. Système de communication selon la revendication 1 ou 2, **caractérisé en ce que** dans la zone totale sont disposées des zones de localisation dans lesquelles se trouve une ou plusieurs cellules radio, et **en ce que** les zones partielles sont formées par des zones de localisation et/ou des cellules radio.

4. Système de communication selon l'une des revendications précédentes, **caractérisé en ce que** sont stockées dans les moyens de stockage une ou plusieurs identifications de zones partielles qui se situent à l'intérieur d'une zone d'abonnés.

5. Système de communication selon l'une des revendications précédentes, **caractérisé en ce que** sont stockés dans les moyens de stockage une ou plusieurs identifications de zones partielles qui se situent à l'extérieur d'une zone d'abonnés.

6. Système de communication selon l'une des revendications 3 à 5, **caractérisé en ce que** les identifications des zones de localisation et/ou les identifications des cellules radio présentent des paramètres fictifs.

7. Système de communication selon l'une des revendications 3 à 6, **caractérisé en ce que** seulement les identifications des zones de localisation ou seulement les identifications des cellules radio présentent des paramètres fictifs.

8. Système de communication selon l'une des revendications précédentes, **caractérisé en ce que** les moyens de vérification et/ou les moyens de stockage sont disposés dans les appareils terminaux mobiles ou côté réseau.

9. Système de communication selon l'une des revendications précédentes, **caractérisé en ce que** des modules insérables dans les appareils terminaux mobiles sont prévus, et **en ce que** les moyens de stockage et/ou les moyens de vérification sont disposés sur ces modules.

10. Système de communication selon l'une des revendications précédentes, **caractérisé en ce qu'**une banque de données est prévue qui contient des données concernant la topologie du réseau, **en ce qu'**une unité de détermination est prévue qui détermine sur la base de ces données les identifications de zones partielles concernant les zones d'abonnés, et **en ce qu'**une unité de vérification est prévue qui vérifie si les identifications déterminées coïncident avec les identifications stockées dans les moyens de stockage.

11. Système de communication selon la revendication 10, **caractérisé en ce qu'**une unité est prévue qui, pour le cas où les identifications déterminées ne coïncident pas avec les identifications stockées dans les moyens de stockage, transmet les identifications déterminées dans le but de leur stockage aux moyens de stockage.

12. Système de communication selon la revendication 11, **caractérisé en ce que** l'unité est réalisée de telle sorte que les identifications déterminées sont transmises par radio.

13. Système de communication selon l'une des revendications 10 à 12, **caractérisé en ce que** la banque de données et/ou l'unité de détermination et/ou l'unité de vérification sont disposées du côté du réseau.

14. Utilisation d'un appareil terminal mobile pour le fonctionnement dans un système de communication selon l'une des revendications 1 à 13, où le système de communication comprend des moyens de stockage, dans lesquels sont stockées une ou plusieurs identifications de zones partielles d'une zone totale couverte par le système de communication, et des moyens de vérification qui permettent de constater si l'identification de la zone partielle dans laquelle se trouve l'appareil terminal mobile est comprise dans les identifications stockées dans les moyens de stockage, où la au moins une identification stockée de la zone partielle présente un ou plusieurs paramètres fictifs qui représentent une pluralité de valeurs, et en ce que les moyens de stockage et/ou les moyens de vérification sont disposés dans l'appareil terminal mobile.

15. Utilisation d'un appareil terminal mobile selon la revendication 14, **caractérisé en ce que** les moyens de stockage et/ou les moyens de vérification sont disposés dans l'appareil terminal mobile lui-même ou sur un module insérable dans l'appareil terminal mobile.
